# FASCICULE DE BREVET EUROPEEN

(11) **EP 2 396 642 B1**
(45) Date de publication et mention de la délivrance du brevet: **08.04.2015**
(21) Numéro de dépôt: 10707091.4
(22) Date de dépôt: 11.02.2010
(51) Int. Cl.: G01N 21/00, G02B 6/124

(54) **SYSTEME ET EQUIPEMENT DE DETECTION OPTIQUE DE PARTICULES A EVENTAIL DE DECOUPLAGE DE L'INFORMATION OPTIQUE, PROCEDE DE FABRICATION CORRESPONDANT**
SYSTEM UND VORRICHTUNG ZUR DETEKTION VON PARTIKELN MIT EINEM FÄCHER ZUR AUSKOPPLUNG VON OPTISCHEN INFORMATIONEN UND ENTSPRECHNENDES HERSTELLUNGSVERFAHREN.
SYSTEM AND EQUIPMENT FOR PARTICLE DETECTION WITH A FAN FOR OUTCOUPLING OF OPTICAL INFORMATION AND CORRESPONDING MANUFACTURING PROCEDURE.

(30) Priorité: 12.02.2009 FR 0900633
(43) Date de publication de la demande: 21.12.2011
(73) Titulaire: Centre National de la Recherche Scientifique (CNRS), 75794 Paris Cedex 16 (FR)
(72) Inventeur: BENISTY, Henri, F-91120 Palaiseau (FR)
(74) Mandataire: Novagraaf Technologies
(86) Numéro de dépôt international: PCT/FR2010/000109
(87) Numéro de publication internationale: WO 2010/092255

(56) Documents cités:
- US-A1- 2008 272 302
- SHVETS AND S TRENDAFILOV G: "Guiding, Focusing, and Sensing on the Subwavelength Scale Using Metallic Wire Arrays" PHYSICAL REVIEW LETTERS, AMERICAN PHYSICAL SOCIETY, NEW YORK, US, vol. 99, 2 août 2007 (2007-08-02), XP007906128 ISSN: 0031-9007
- PATRICK DUMAIS ET AL: "Microchannel-Based Refractive Index Sensors Monolithically Integrated With Silica Waveguides: Structures and Sensitivities" IEEE SENSORS JOURNAL, IEEE SERVICE CENTER, NEW YORK, NY, US, vol. 8, no. 5, 1 mai 2008 (2008-05-01), pages 457-464, XP011215495 ISSN: 1530-437X
- BOZHEVOLNYI S I ET AL: "Channel plasmon-polariton guiding by subwavelength metal grooves" PHYSICAL REVIEW LETTERS APS USA, vol. 95, no. 4, 22 juillet 2005 (2005-07-22), pages 046802/1-4, XP002546661 ISSN: 0031-9007

## Description

### DOMAINE TECHNIQUE DE L'INVENTION

La présente invention se rapporte au domaine de la microscopie pour la détection optique de particules.

Elle se rapporte plus particulièrement à un système de détection optique de particules disposées dans une zone de visualisation susceptible d'être illuminée par un rayonnement présentant une longueur d'onde déterminée, ce système comportant un moyen de détection optique, ainsi qu'un ensemble de fils métalliques disposés dans un même plan et dont une extrémité est suffisamment proche de la zone de visualisation pour permettre un transfert de l'information optique au travers desdits fils métalliques.

La présente invention concerne également un équipement de détection optique de particules comprenant une pluralité de tels systèmes de détection optique, déposés sur un unique substrat, ainsi que des procédés de fabrication d'un tel système et d'un tel équipement.

### ETAT DE LA TECHNIQUE ANTERIEURE

Dans certains domaines comme la biologie ou la biochimie, il devient de plus en plus fondamental de pouvoir détecter des événements moléculaires chimiquement sélectifs, tels que par exemple une hybridation entre protéines, entre anticorps et antigène, entre streptavidine et biotine, ou encore entre virus et récepteurs membranaires. Or un problème général en microscopie est l'obtention d'une haute résolution de l'image capturée par l'objectif, celle-ci étant déterminée par le critère de Rayleigh comme inversement proportionnelle à l'ouverture numérique objet de l'objectif, mais en pratique limitée à une valeur maximale dans le spectre des vecteurs d'onde transverses à l'axe optique. L'image est en effet obtenue par application d'un filtre passe-bas à l'ensemble des détails existants dans le plan-objet, les détails dits sub-longueur d'onde n'étant pas transmis dans le champ lointain, lieu où l'objectif collecte les champs provenant de la source (le plan-objet) à imager.

Pour pallier cette limitation de la résolution et afin de mieux détecter les nanoparticules, plusieurs solutions de microscopie dite « de champ proche », ou encore microscopie SNOM (« balayage optique en champ proche », ou « scanning near-field optical » en langue anglo-saxonne) ont été proposées, comme par exemple dans le document de brevet FR 2 785 045 A1. Selon cette technique, la partie locale du champ électromagnétique contenant les plus hautes fréquences spatiales (champ proche) est couplée à la matière structurée. Ces fréquences, porteuses de l'information la plus détaillée spatialement, ne peuvent en effet se propager vers l'espace lointain et ne donnent lieu qu'à des ondes évanescentes, indétectables après quelques centaines de nanomètres, ou quelques microns dans les meilleurs cas. Avec cette solution de champ proche, la matière structurée permet de convertir les composantes de champ proche en composantes de champ lointain, qu'il est alors possible de capturer. Cette matière structurée peut à cet effet être, par exemple, une pointe métallique fine ou une fibre de verre effilée ou une fibre de verre revêtue d'une très fine couche métallique.

Néanmoins, cette solution présente un certain nombre d'inconvénients liés à la difficulté de reproductibilité de la préparation ainsi que d'approche des pointes, à la faible section efficace des pointes diélectriques et, surtout, à un certain manque de parallélisme. Ainsi, une telle solution, si elle est adaptée à l'instrumentation de recherche, demeure difficile à réaliser d'un point de vue industriel. Les principaux obstacles à sa réalisation résident dans la délicatesse du placement manuel de l'échantillon et dans le choix d'une zone à explorer, très petite par rapport à l'échantillon et à la fois difficilement et fastidieusement repérée avant mesure locale dans un équipement de microscopie standard.

Une première solution pour subvenir à ces inconvénients consiste à optimiser les conditions d'existence des plasmons, et notamment leurs fréquences de coupure. Il est ainsi apparu qu'une épaisseur optimale de métal de l'ordre 12 nanomètres - cette épaisseur pouvant varier en fonction du métal noble utilisé - permet d'obtenir la plus grande fréquence spatiale possible avec un plasmon avec pertes. Ce type de solution est présenté dans la publication "Planar metal plasmon waveguides: frequency-dependent dispersion, propagation, localization, and loss beyond the free electron model" (J. A. Dionne, L. A. Sweatlock, H. A. Atwater, and A. Polman ; Phys. Rev. B ; Vol. 72 ; p. 075405 ; 2005), ainsi que dans la publication "Plasmon slot waveguides: Towards chip-scale propagation with subwavelength-scale localization" (J. A. Dionne, L. A. Sweatlock, H. A. Atwater, and A. Polman ; Phys. Rev. B ; Vol. 73 ; p. 035407 ; 2006) et dans la publication "Plasmon-polariton waves guided by thin lossy metal films of finite width: Bound modes of symmetric structures" (P. Berini ; Phys. Rev. B; Vol. 61 ; p. 10484-10502; 2000)., ainsi que dans la publication "Plasmon-polariton waves guided by thin lossy metal films of finite width: Bound modes of asymmetric structures," (P. Berini, Phys. Rev. B, Vol. 53, p. 125417 ; 2001) Dans les deux premières publications citées, il y est également enseigné l'intérêt de la géométrie de « métal à fente » (« slot waveguide » en langue anglo-saxonne). D'autres géométries ont aussi été proposées avec succès pour constituer des canaux plasmoniques métalliques de petite section, par exemple des sillons en V ainsi qu'il est présenté dans la publication "Channel Plasmon-Polariton Guiding by Subwavelength Metal Grooves," (S. I. Bozhevolnyi, V. S. Volkov, E. Devaux, and T. W. Ebbesen, Phys. Rev. Lett. ; Vol. 95 ; p. 046802 (1-4) ; 2005). Ces solutions alternatives présentent des plasmons moins confinés que ceux des fils minces mentionnés, mais peuvent garder de l'intérêt pour les applications envisagées ici.

Une deuxième solution consiste à exploiter la propagation particulière des ondes évanescentes dans des multicouches métalliques. Du fait d'un indice équivalent négatif, un plan métallique agit comme une « superlentille » capable de faire l'image d'un point situé sous lui vers un point situé au-dessus, avec un grandissement unitaire et une résolution très nettement sub-longueur d'onde. Différentes variantes de superlentille ont été également proposées dans le but d'obtenir une formation d'image avec un grandissement variable comme en optique classique. Ainsi, selon une première variante, des tranches circulaires ont été proposées pour former une superlentille grandissante, comme par exemple dans la publication « Magnifying Superlens in the Visible Frequency Range » (Igor I. Smolyaninov, Yu-Ju Hung, Christopher C. Davis ; SCIENCE ; Vol. 315 ; p. 1699-1701 ; 23 mars 2007). Selon une deuxième variante, il a été proposé de mettre en place un ensemble multicouche métallique de type superlentille sur un demi-cylindre micrométrique, la courbure résultante permettant de faire l'image agrandie de la zone se trouvant sous le demi-cylindre, comme par exemple dans la publication « Far-Field Optical Hyperlens Magnifying Sub-Diffraction-Limited Objects » (Zhaowei Liu, Hyesog Lee, Yi Xiong, CHen Sun, Xiang Zhang ; SCIENCE ; Vol. 315 ; p. 1686 ; 23 mars 2007).

Une autre solution consiste à utiliser un ensemble 3x3 de fils électriques qui s'approchent mutuellement en trois dimensions vers la zone de visualisation. Ce type de solution est présenté dans la publication " Guiding, Focusing, and Sensing on the Subwavelength Scale Using Metallic Wire Arrays" (G. Shvets et al., PRL 99, 053903 (2007).

la première solution, bien qu'étant plus facile à fabriquer qu'une pointe SNOM, ne permet cependant pas d'obtenir une résolution sub-longueur d'onde, ou encore « super-résolution », celle-ci étant limitée notamment par les métaux et les plasmons. La deuxième solution offre un potentiel optique meilleur, avec un accès à la super-résolution, mais est délicate à mettre en oeuvre au voisinage d'un conduit fluide, car le demi-cylindre doit être parfait et doit être exactement au-dessus de la zone la plus structurée du système, et enfin la résolution n'est pas atteinte le long de l'axe du demi-cylindre, mais seulement transversalement au cylindre.

Aucune solution de l'état de la technique ne permet donc d'obtenir une microscopie de résolution sub-longueur d'onde, permettant d'améliorer la détection optique de petites particules, jusqu'à des dimensions nanométriques, tout en présentant des caractéristiques la rendant apte à une production industrielle.

### EXPOSE DE L'INVENTION

Le but de la présente invention est de remédier à ce problème technique, en proposant des systèmes métalliques qui individualisent des canaux plasmoniques, en particulier des systèmes métalliques discontinus. Pour cela, l'invention repose sur une pluralité de canaux plasmoniques métalliques convergeant vers la zone de visualisation des nanoparticules à détecter, celles-ci pouvant éventuellement circuler dans un fluide.

Dans ce but, l'invention a pour objet un système de détection optique de particules disposées dans une zone de visualisation susceptible d'être illuminée par un rayonnement présentant une longueur d'onde déterminée. Ce système comporte un moyen de détection optique, ainsi qu'un ensemble de canaux plasmoniques métalliques disposés dans un même plan et dont une extrémité est suffisamment proche de la zone de visualisation pour permettre un transfert de l'information optique d'une extrémité à l'autre de ces canaux. Dans ce système, les canaux sont agencés de manière à ce que l'ensemble forme autour de la zone de visualisation un éventail de transfert de l'information optique. La valeur d'au moins une caractéristique spatiale de l'éventail est inférieure à la longueur d'onde au niveau des extrémités des canaux proches de la zone de visualisation. La valeur d'au moins une caractéristique spatiale de l'éventail est supérieure à la longueur d'onde au niveau des extrémités des canaux éloignées de la zone de visualisation. Le système comporte des moyens de découplage optique entre les extrémités éloignées de la zone de visualisation et le moyen de détection optique disposé au-dessus du plan (XY) desdits canaux et desdits moyens de découplage optique.

On entendra dans le présent brevet par canal plasmonique métallique un canal permettant le passage de l'information optique sous forme plasmonique. Ce type de canal peut être réalisé de différentes manières, en particulier par des fils métalliques ou par des sillons creusés dans une couche métallique.

Cette solution, combinant une disposition originale de canaux plasmoniques métalliques et des moyens de découplage de signaux optiques, permet de retranscrire l'information optique agrandie pour pouvoir être capté en champ lointain avec un moyen de détection optique connu dans le domaine de la microscopie. La forme en éventail des canaux permet en effet de coupler une zone de champ proche sub-longueur d'onde à une zone de retrait où les caractéristiques spatiales des canaux sont modifiées de sorte à rayonner l'information optique acquise localement et agrandie au passage de l'éventail vers des moyens de détection classiques. Du fait des caractéristiques spatiales des canaux plasmoniques au niveau de chacune de leurs extrémités, il est rendu possible de réaliser une microscopie de résolution sub-longueur d'onde, permettant de détecter des particules présentant des dimensions nanométriques.

De préférence, la valeur d'au moins une caractéristique spatiale de l'éventail de canaux est inférieure à la moitié de la longueur d'onde au niveau des extrémités proches de la zone de visualisation.

Selon un premier mode de réalisation, une caractéristique spatiale de l'éventail de canaux est la distance entre deux canaux voisins.

Selon un deuxième mode de réalisation, une caractéristique spatiale de l'éventail de canaux est la largeur des canaux.

Selon un premier mode de mise en oeuvre de l'invention, les canaux plasmoniques métalliques sont constitués de fils métalliques.

Selon un second mode de mise en oeuvre de l'invention, les canaux plasmoniques métalliques sont constitués de sillons en V entaillant une couche métallique.

Dans ce dernier cas, une caractéristique spatiale de l'éventail de canaux peut être la profondeur des sillons formant l'éventail.

Toujours dans le cas de canaux plasmoniques sous la forme de sillons, l'angle d'inclinaison des sillon est préférentiellement plus raide aux extrémités proches de la zone de visualisation qu'aux extrémités qui en sont éloignées.

Selon un mode de réalisation préféré, les canaux de l'éventail de transfert sont déposés sur un substrat, ce qui permet de faire tenir l'éventail. Il peut également être prévu que les fils de l'éventail soient enterrés. Dans ce cas, il est possible de former un système symétrique et d'utiliser alors les enseignements de la publication "Plasmon-polariton waves guided by thin lossy metal films of finite width: Bound modes of symmetric structures" (P. Berini ; Phys. Rev. B ; Vol. 61 ; p. 10484-10502 ; 2000).

Dans le cas où les fils de l'éventail sont enterrés, ils peuvent se prolonger au niveau de la zone de visualisation sous forme de canaux parallèles rapprochés. Dans ce mode de réalisation, la distance entre le fond de la zone de visualisation et les canaux enterrés sous cette zone reste sub-longueur d'onde, de sorte que l'information optique recherchée reste accessible avec un signal suffisant. Cette technique peut permettre un meilleur contrôle géométrique de la forme que dans le cas d'un éventail interrompu au bord de la zone de visualisation.

De préférence, un sillon est ménagé dans le substrat de manière à former un canal pour la circulation d'un fluide transportant les particules à détecter. Ce sillon peut être recouvert pour éviter l'évaporation, soit par un couvercle le long du sillon lui-même, soit par tout un superstrat rapporté sur le substrat, notamment un superstrat en matière souple telle les élastomère, les silicones, etc., ainsi qu'il est connu de l'homme de l'art dans le domaine de la microfluidique et des « laboratoires sur puce (« lab-on-a-chip » en langue anglo-saxonne).

L'invention concerne également un système de détection optique tel que décrit précédemment dans lequel les canaux de l'éventail de transfert sont enterrés, ces canaux se prolongeant sous la zone de visualisation pour former un réseau de canaux parallèles, la distance entre deux canaux parallèles adjacents étant inférieure à la longueur d'onde du rayonnement, les canaux se trouvant sous la zone de visualisation à une profondeur inférieure à la longueur d'onde du rayonnement.

Lorsqu'un fluide peut s'écouler le long d'un canal, il peut être prévu qu'au niveau de la zone de visualisation, des transducteurs électromécaniques miniatures soient associés aux canaux de l'éventail de transfert ou commandé par lesdits canaux pour le contrôle des lignes d'écoulement du fluide ou pour le contrôle spécifique des particules en mouvement dans ce fluide.

Selon un mode particulier de réalisation, les moyens de découplage optique comprennent des extracteurs à réseaux situés au niveau de l'extrémité éloignée de la zone de visualisation, ce qui permet de coupler les modes plasmoniques vers le superstrat sensiblement suivant la verticale au plan de l'éventail.

Selon une variante particulière de réalisation de ces extracteurs à réseaux, ceux-ci consistent en une modulation de la largeur des extrémités de l'éventail de transfert à l'échelle de la longueur d'onde.

Selon un autre mode particulier de réalisation, les moyens de découplage optique comprennent des extracteurs à réseaux situés au niveau de fils diélectriques de haut indice disposés à l'extrémité des canaux éloignée de la zone de visualisation et dans le prolongement de ces canaux. Ces extracteurs offrent, par rapport au cas métallique, une plus grande longueur de propagation, donc un côté ouvert de l'éventail arbitrairement éloigné de la zone de visualisation.

Selon un mode particulier de réalisation de ces extracteurs à réseaux, ceux-ci consistent en une modulation de la largeur ou de la section des fils diélectriques.

Selon un autres mode particulier de réalisation de ces extracteurs à réseaux, ceux-ci consistent en des trous perforants en tout ou partie la zone centrale des fils diélectriques.

Selon une première variante de réalisation de l'illumination, le système comporte un moyen d'illumination et un second ensemble de canaux métalliques disposés dans un même plan, dont une extrémité est sensiblement proche de la zone de visualisation, et agencés de manière à ce que ce second ensemble forme un second éventail de transfert de l'information optique autour de la zone de visualisation, globalement en symétrie du premier éventail de transfert, par rapport à la zone de visualisation. Il pourrait également être envisagé que le second ensemble soit en quinconce vis-à-vis du premier.

Dans cette variante, le système comporte préférentiellement des moyens de couplage optique entre les extrémités éloignées de la zone de visualisation et le moyen d'illumination, ce qui permet de coupler dans les canaux la lumière provenant d'un faisceau externe et de la concentrer vers la zone de visualisation, et ainsi d'obtenir une illumination particulièrement efficace.

L'invention concerne également un système de détection optique tel que décrit précédemment comportant un moyen d'illumination et un second ensemble de canaux métalliques agencés de manière à ce que ledit second ensemble forme un second éventail de transfert de l'information optique, en symétrie du premier éventail de transfert, par rapport à la zone de visualisation, le premier et le second ensemble étant enterrés sous la zone de visualisation à une profondeur inférieure à la longueur d'onde, le premier et le second ensemble étant reliés l'un à l'autre par un réseau de canaux parallèles écartés les uns des autres d'une distance inférieure à la longueur d'onde du rayonnement.

Selon différents modes de réalisation, les canaux parallèles peuvent être de section constante ou alors ils peuvent être modulés par une section modifiée de faible longueur, c'est-à-dire de longueur inférieure à la longueur d'onde, et de largeur inférieure, égale ou supérieure au reste du canal pour inhiber la plus grande part de la transmission plasmonique directe par changement d'impédance et en forçant la transmission à se faire par les champs évanescents autour de la section modifiée, cette configuration rendant le système plus sensible à la présence de la particule dans le sillon au-dessus dudit raccord entre les éventails.

Dans le cas où les fils de l'éventail sont enterrés et qu'ils se prolongent sous la zone de visualisation, les moyens de couplage de l'illumination peuvent constituer un éventail lui aussi enterré, dont les extrémités du côté de la zone de visualisation se raccordent avec contact métallique et plasmonique aux canaux de découplage. Dans ce cas, les particules de la zone de visualisation au-dessus des canaux plasmoniques enterrés agissent pour moduler ou modifier la transmission de l'illumination le long de ces fils. Le raccord entre canaux plasmoniques sous la zone de visualisation peut alors être défini de façon à limiter le flux direct du canal plasmonique d'illumination et à optimiser la modification apportée par la particule se situant au-dessus, notamment s'il se présente sous la forme d'une constriction de taille sub-longueur d'onde qui réduit le couplage plasmonique à un effet tunnel entre le côté de l'éventail d'illumination et celui de l'éventail de découplage.

Le moyen d'illumination peut fonctionner en optique intégrée et être situé dans le plan du second éventail de transfert.

Préférentiellement, les moyens de couplage optique comprennent des extracteurs/coupleurs à réseaux situés au niveau des extrémités éloignées de la zone de visualisation, ce qui assure un transfert efficace de la lumière vers les canaux plasmoniques.

Préférentiellement, les extracteurs à réseaux consistent en une modulation de la largeur des extrémités de l'éventail de transfert à l'échelle de la longueur d'onde, assurant ainsi une bonne propagation de la lumière incidente à travers les canaux plasmoniques, surtout si la lumière provient de l'axe vertical aux canaux.

Selon une autre variante, les moyens de couplage optique comprennent des coupleurs à réseaux situés au niveau de fils diélectriques de haut indice disposés à l'extrémité des canaux éloignée de la zone de visualisation et dans le prolongement de ces canaux.

Selon un mode particulier de réalisation des ces coupleurs à réseaux, ceux-ci consistent en une modulation de la largeur ou de la section des fils diélectriques.

Selon un autre mode particulier de réalisation des ces coupleurs à réseaux, ceux-ci consistent en des trous perforants en tout ou partie la zone centrale des fils diélectriques.

Selon une deuxième variante de réalisation de l'illumination, le système comporte un moyen d'illumination éclairant directement la zone de visualisation et un second ensemble de canaux métalliques agencés de manière à former un second éventail de transfert de l'information optique autour de la zone de visualisation.

Dans cette variante, il peut être prévu que le système comporte une pluralité d'éventails parallèles à un même plan et situés à des hauteurs différentes par rapport à la zone de visualisation. Ces éventails, superposés les uns sur les autres à des hauteurs différentes, présentent l'avantage de pouvoir être formés de façon à favoriser la suppression d'aberrations par une disposition adéquate.

Ainsi, de préférence, les hauteurs et les caractéristiques géométriques des éventails sont déterminées de manière à introduire un chromatisme fonction de celui du moyen de détection optique, ce qui permet notamment de compenser le chromatisme du moyen de détection optique - incluant préférentiellement un objectif de microscope - pour obtenir une image dénuée d'aberrations chromatiques.

De préférence également, le système comporte des moyens de compensation des aberrations géométriques ou chromatiques transverses de l'image reconstituée par le moyen de détection optique, ce qui améliore la qualité de l'image obtenue.

Selon un mode particulier de réalisation, au moins un canal plasmonique comporte une section modifiée au niveau de son extrémité la plus proche de la zone de visualisation, pour l'adaptation d'impédance de l'information optique issue de cette zone de visualisation.

Selon un autre mode particulier de réalisation, au moins un éventail de transfert de l'information optique est muni de contacts électriques pour le contrôle du potentiel électrostatique et de l'attraction ou la répulsion des particules dans la zone de visualisation.

Selon un autre mode particulier de réalisation, au moins un éventail de transfert de l'information optique est muni de contacts électriques pour le contrôle de réactions électrochimiques dans la zone de visualisation.

L'invention concerne également un équipement de détection optique de particules, comprenant une pluralité de systèmes élémentaires de détection optique de particules selon l'une des modes de réalisation ci-dessus et déposés sur un unique substrat. Cet équipement permet de bénéficier des avantages d'un système élémentaire précédemment décrit ainsi que de techniques de fabrication collective de tels systèmes élémentaires. Le superstrat faisant couvercle peut lui aussi profiter de ces techniques, et il peut de façon générale compléter les fonctionnalités dont on aura doté le substrat par la généralisation des présents enseignements.

Selon un mode de réalisation particulier de cet équipement, les systèmes élémentaires forment un réseau dans le plan du substrat.

Préférentiellement, au moins un circuit fluidique joint l'un à l'autre au moins deux systèmes élémentaires de détection optique.

Selon une variante particulière, au moins deux systèmes élémentaires constituent les bras d'un dispositif interférométrique, les zones de visualisation associées à chacun de ces systèmes élémentaires étant sensiblement proches l'une de l'autre. Le signal d'interférence entre les deux bras permet alors de révéler la présence d'une nanoparticule de façon particulièrement sensible.

Pour l'analyse du mouvement des particules, il peut être prévu que l'équipement comprenne des moyens d'analyse en temps réel des signaux optiques collectés par le moyen de détection optique en champ lointain et de déduction des mouvements détectés dans la zone de visualisation.

L'invention concerne également un procédé de fabrication d'un système de détection optique de particules. Ce procédé comprend une étape de lithographie sur une couche métallique déposée sur un substrat, pour la constitution de canaux plasmoniques métalliques sur un même plan de ce substrat de manière qu'une extrémité soit proche d'une zone de visualisation susceptible d'être illuminée par un rayonnement présentant une longueur d'onde déterminée. Dans ce procédé, lors de cette étape de lithographie, ces canaux sont agencés de manière à ce que cet ensemble forme autour de la zone de visualisation un éventail de transfert de l'information optique, la valeur d'au moins une caractéristique spatiale de l'éventail étant inférieure à la longueur d'onde au niveau des extrémités des canaux proches de la zone de visualisation, la valeur d'au moins une caractéristique spatiale de l'éventail étant supérieure à la longueur d'onde au niveau des extrémités des canaux éloignées de la zone de visualisation,. De plus, ce procédé comprend également une étape de disposition de moyens de découplage optique entre ces extrémités éloignées de la zone de visualisation et un moyen de détection optique disposé au dessus du plan (XY) desdits canaux et desdits moyens de découplage optique.

L'invention concerne enfin un procédé de fabrication d'un équipement de détection optique de particules. Ce procédé consiste à disposer, sur un unique substrat, une pluralité de systèmes élémentaires de détection optique de particules obtenu par le procédé de fabrication décrit ci-dessus.

Selon une variante de ce procédé, il comprend une étape supplémentaire de lithographie sur un substrat pour l'aménagement d'au moins un sillon de manière à former au moins un canal fluidique joignant l'un à l'autre au moins deux systèmes élémentaires de détection optique.

### BREVE DESCRIPTION DES FIGURES

D'autres caractéristiques et avantages de l'invention ressortiront à la lecture de la description qui suit, en référence aux figures annexées, qui illustrent :
- la figure 1, un schéma en vue en trois dimensions d'un système de détection optique selon un premier mode de réalisation de l'invention,
- la figure 2, un schéma en vue de dessus du système de détection optique selon ce premier mode de réalisation de l'invention,
- la figure 3, un schéma en vue de dessus d'un système de détection optique selon un second mode de réalisation de l'invention,
- la figure 4, un schéma en vue de coupe du système de détection optique selon ce second mode de réalisation de l'invention,
- la figure 5, un schéma en vue de dessus d'un système de détection optique selon un troisième mode de réalisation de l'invention,
- la figure 6, un schéma en vue rapprochée en trois dimensions d'un système de détection optique selon un quatrième mode de réalisation de l'invention,
- la figure 7, un schéma en vue de dessus d'un système de détection optique selon un cinquième mode de réalisation de l'invention,
- la figure 8, un schéma en vue de coupe du système de détection optique selon ce cinquième mode de réalisation de l'invention,
- la figure 9, un schéma en vue de dessus d'une première variante d'un équipement de détection optique selon un sixième mode de réalisation,
- la figure 10, un schéma en vue de dessus d'une seconde variante de cet équipement de détection optique selon ce sixième mode de réalisation,
- la figure 11, un schéma en vue de dessus d'un équipement de détection optique selon un septième mode de réalisation,
- la figure 12, un schéma en vue rapprochée en trois dimensions de cet équipement de détection optique selon ce septième mode de réalisation, et
- les figures 13 à 15, des schémas illustrant différentes variantes de réalisation de l'éventail de canaux plasmoniques métalliques ;
- la figure 16, un schéma en vue en trois dimensions d'un système de détection optique selon un huitième mode de réalisation de l'invention ;
- la figure 17, un schéma en vue en trois dimensions d'un système de détection optique selon un neuvième mode de réalisation de l'invention.

Pour plus de clarté, les éléments identiques ou similaires sont repérés par des signes de référence identiques sur l'ensemble des figures.

### DESCRIPTION DETAILLEE D'UN MODE DE REALISATION

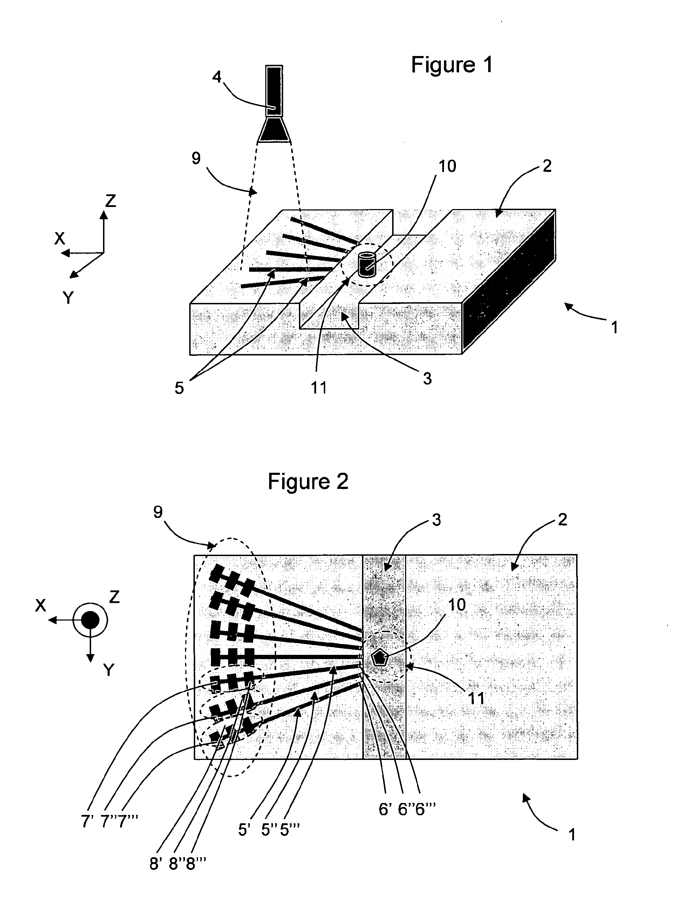

En référence aux figures 1 et 2, un système de détection de particules selon un premier mode de réalisation de l'invention comporte :
- un moyen d'illumination (non représenté),
- un moyen de détection optique 4,
- un substrat 2 dans lequel est creusé un sillon 3,
- une zone de visualisation 11 au sein du sillon 3, comportant des particules 10, et
- un ensemble 5 de canaux plasmoniques métalliques 5', 5" et 5'" formant un éventail.

Les canaux plasmoniques métalliques 5', 5" et 5'" sont constitués de fils disposés suivant un éventail, afin que leur ensemble constitue des moyens multimodes permettant de capter sans balayage une information dans un champ et la retranscrire agrandie. Cet éventail couple une zone 6 de champ proche sub-longueur d'onde (la zone de visualisation 11) à une zone 7 en retrait où les fils métalliques sont plus écartés et permettent de rayonner l'information acquise localement et agrandie au passage de l'éventail 5 vers des moyens de détection 4.

Pour permettre un transfert de l'information optique du champ proche sub-longueur d'onde vers le champ lointain, la distance entre deux fils 5', 5" et 5'" voisins est inférieure à la longueur d'onde au niveau des extrémités 6', 6" et 6'" proches de la zone de visualisation 11, et la distance entre deux fils 5', 5" et 5'" voisins est supérieure à la longueur d'onde au niveau des extrémités 7', 7" et 7"' éloignées de la zone de visualisation 11.

Le substrat 2 permet de faire tenir l'éventail 5 en le posant dessus. Pour ce substrat, on peut envisager soit du verre, soit du silicium recouvert d'une couche de silice amorphe de typiquement 100 nm à 30000 nm. On peut encore envisager des supports polymériques, parmi les plastiques transparents (poly-méthyl-métacrylate, butyl-cyclo-benzène, ABS, PVC, polypropylène, ou encore parmi les elastomères ou les silicones(polydiméthylsiloxane (PDMS) et ses dérivés), ou encore parmi les polymères tels le polyimide et le Kapton. Un support dans un oxyde de plus haut indice peut aussi avoir un certain intérêt pour les plasmons,. Des oxydes tels que le niobate de lithium, le saphir (Al₂O₃) ou le quartz sont également des candidats possibles.

Ces fils métalliques peuvent être obtenus suivant des techniques de découpe d'une couche métallique mince uniforme par des moyens de lithographie, tels qu'une résine et une exposition par faisceau d'électrons, compte tenu des échelles à atteindre.

Le degré d'écartement, la largeur et la hauteur des sections élargies sont optimisées pour que l'information de champ proche soit au mieux transmise dans la partie élargie 7 de l'éventail. L'homme du métier sera à même de procéder à de telles optimisations. Par exemple, l'épaisseur peut d'abord être optimisée, soit à la valeur présentant le meilleur compromis pour les pertes, soit à une valeur légèrement supérieure ou inférieure, compte tenu des aspects délicats de l'optimisation globale du système. Il peut ensuite être optimisée tour à tour l'écart angulaire entre deux fils de l'éventail - et sa régularité le cas échéant - et la fraction de métal restante, surtout dans la zone de visualisation et dans la zone d'expansion du mode.

L'homme du métier notera ici que la longueur d'onde de la lumière susceptible d'être transmise au travers de ces fils métalliques est prédéterminée en bonne partie par le métal constituant ces fils, par exemple de l'argent, en raison des résonances plasmoniques qui ne garantissent une résolution accrue que dans un faible domaine de longueur d'onde. Toutefois, dans ce dernier cas, si la résolution n'est pas accrue, elle peut rester du même ordre de grandeur qu'un bon objectif de microscope en champ lointain. Par ailleurs, une longueur entre 3 et 300 micromètres conviendrait pour ces fils, la détermination de la longueur exacte à choisir dépendant de l'atténuation du plasmon utilisé le long du chemin variable, du fait des pertes plasmoniques, et donc notamment de la fréquence lumineuse utilisée.

L'angle entre les fils métalliques de l'éventail dépend de leur nombre. Pour une vingtaine de fils, il conviendrait de prévoir un angle de l'ordre de 0,10 radians. Les fils atteignent alors une séparation de l'ordre du micron au bout de dix microns. Pour découpler l'information contenue vers l'espace libre, la période de corrugation est sensiblement égale à la longueur d'onde dans le vide considérée divisée par l'indice effectif du mode plasmonique dans le fil au niveau de l'extracteur. Des indices de 1,5 et une longueur d'onde de 600 nanomètres conduisent à une période de modulation de la largeur de 400 nanomètres dans la zone de découplage. Des indices effectifs plus grands, propre au domaine de superrésolu, conduisent en principe à des période d'autant plus faible, mais si l'on souhaite que les fils fonctionnent dans ce régime au niveau de l'extracteur, on peut alors travailler à un ordre plus élevé pour coupler, ce qui revient à se rapprocher de toute façon d'une période entre une demi et une longueur d'onde, suivant le milieu émergent.

Selon le mode de réalisation préféré, il est disposé un creux 3 - ou encore aménagement ou sillon - dans le substrat au niveau de la zone de visualisation 11, afin par exemple de faire passer un canal nanofluidique au sein duquel des particules d'intérêt 10 sont à détecter.

La zone de visualisation 11 peut être par exemple un cylindre d'axe vertical Z, autour duquel sont disposés les fils métalliques 5', 5" et 5"'. Un tel cylindre peut présenter un diamètre de l'ordre de 400 à 1000 nanomètres.

Selon un mode particulier de réalisation, ce creux 3 comporte des fonctionnalisations chimiques localisées des surfaces de la zone de visualisation 11 permettant par exemple d'ancrer des espèces réactives complémentaires sélectivement en tant que « clés » chimiques de surface des nanoparticules à analyser.

Le moyen de découplage 8 permet de découpler la lumière dans les fils 5', 5" et 5"' vers de la lumière utilisable pour l'imagerie. A cet effet, ce moyen est constitué, pour chaque fil 5', 5" ou 5"', d'un extracteur à réseaux 8', 8" ou 8'" situé dans la partie élargie 7 de l'éventail, consistant à moduler la largeur des pointes de l'éventail à l'échelle de la longueur d'onde concernée. Cette modulation de largeur est une modulation de l'indice effectif. Si la condition de diffraction adéquate est remplie, les modes plasmoniques diffusés par la périodicité se propagent sensiblement suivant l'axe vertical Z.

Le motif périodique des réseaux 8', 8" et 8'" en bout de fil est conçu pour conserver l'intégrité du fil. Si le fil fait 30 nanomètres de largeur au début, il doit faire environ 100 à 250 nanomètres de large à la fin, c'est-à-dire moins d'une longueur d'onde. Avec un angle de 0,010 à 0,015 radians entre ses flancs, le fil atteint en haut de fourchette et au bout de 10 microns une largeur de 180 microns, ce qui correspond à l'ordre de grandeur souhaité.

La modulation est progressivement graduée le long du fil pour rayonner au mieux l'énergie et l'information qu'il transporte. Une modulation maximale aux échelles susmentionnées consiste à diminuer localement la largeur du fil de moitié - 120 nanomètres - avec un rapport de 1:2 entre les parties large et étroite.

Le motif périodique peut également être focalisant sur l'ensemble de l'éventail. Pour des excitations égales des fils en entrée étroite de l'éventail et pour une focalisation de la lumière à 250 microns au-dessus de l'éventail, les angles associés à cette partie du trajet dans le superstrat (air, ou liquide, ou polymère) seraient de l'ordre de 15/250 d'inclinaison sur la verticale, donc moins que 0,1 radians. Toutefois, il s'agit des rayons atteignant l'axe optique, qui ne sont pas représentatifs de toute l'image, qui peut comporter des rayons plus inclinés

Le moyen de détection 4 est un moyen de détection classique de champ lointain, par exemple un objectif de microscope. Il est disposé suivant l'axe vertical Z, de manière à collecter la lumière diffractée par le moyen de découplage 8. Un objectif de collecte de grande ouverture est préféré, afin de collecter l'information à la fréquence spatiale la plus grande, fréquence qui correspond dans la zone de découplage à l'alternance des signes du champ électrique - vu comme champ scalaire - entre deux fils adjacents. Dans l'exemple susmentionné, une ouverture numérique minimale de 0,7 est nécessaire, puisque l'écart typique entre deux éléments découpleurs serait de l'ordre de 1,5 microns.

Un aspect fondamental de ce système 1 est que l'information optique locale de la zone de visualisation 10 est encore disponible sous forme de répartition de la phase de chaque fil rayonnant. Un objet 10 perturbateur à détecter dans la zone de visualisation 11 influence généralement plus d'un fil métallique de l'éventail, et c'est donc le rayonnement collectif des parties arrières de l'éventail qui est capturé, la direction de ce rayonnement révélant la relation de phase entre les diverses composantes. Ainsi, pour un choix convenable des périodicités, le système selon l'invention peut posséder un grandissement arbitraire. De ce fait, la position apparente dans le plan objet de l'objectif de microscope 4 placé sur l'éventail permet de visualiser l'objet dans la zone de visualisation 11, près du côté serré de l'éventail 5.

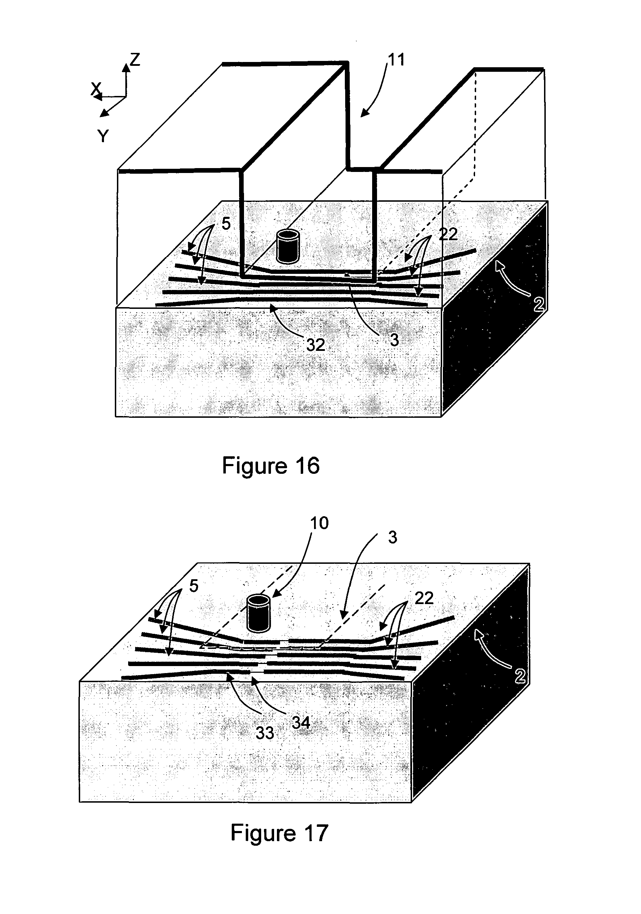

Les figures 16 et 17 représentent un mode de réalisation dans lequel les fils 5', 5", 5'" sont enterrés dans le substrat, c'est-à-dire qu'ils se trouvent dans des orifices creusés dans le substrat.

Dans le cas où les fils de l'éventail sont enterrés, comme représenté sur les figures 16 et 17, les fils 5', 5", 5"' peuvent se prolonger sous le sillon 3 à une profondeur sub-longueur d'onde sous ce sillon et ils sont capables de fournir une information dans la zone de visualisation 11 sur la présence d'une particule 10 proche du fond dudit sillon 3. Une particule 10 trop haute au-dessus du fond ne pourra toutefois pas être vue avec autant de résolution qu'une particule proche du fond.

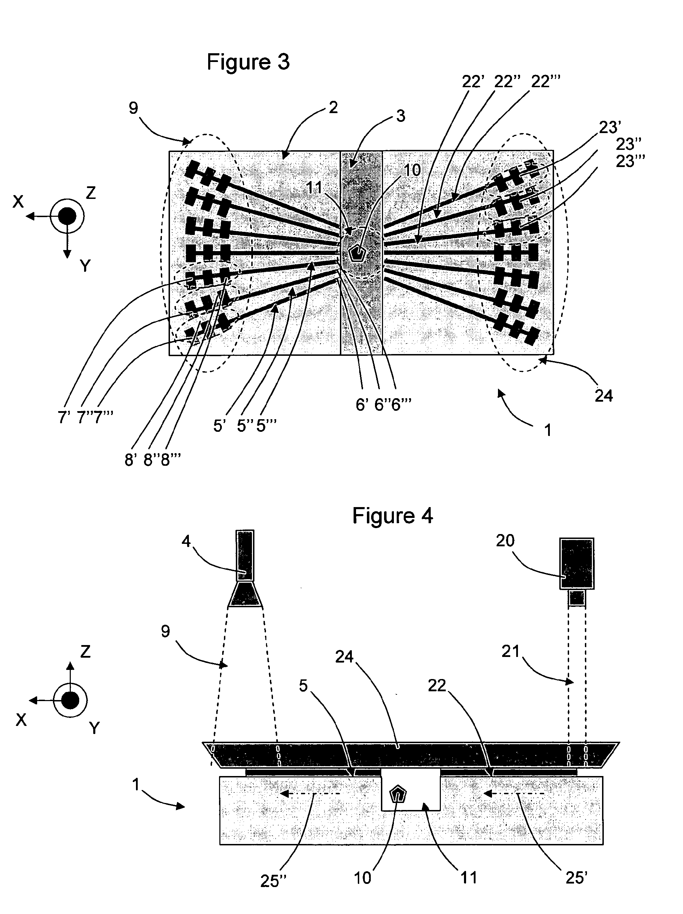

On décrit maintenant un second mode de réalisation de l'invention comportant un moyen d'illumination, en référence aux figures 3 et 4.

Le moyen d'illumination de l'objet 10 comprend une source puissante située dans la proximité de la zone de visualisation 11. Cette source est couplée à la zone de visualisation 11 par un éventail de couplage 22 disposé de façon symétrique par rapport à l'éventail de découplage 5. Pour le plasmon supporté par l'argent Ag, l'énergie des photons est typiquement entre 3 et 3.5 eV, soit entre 380 et 320 nm dans le proche UV. On peut utiliser soit des lampes au Xénon, soit des diodes lasers à base de GaN, soit des lasers Helium-Cadmium vers 325 nm, soit des diodes électroluminescentes (LEDs) ou laser à bases d'AlGaN. On commercialise couramment des LEDs dans cette gamme avec des puissances unitaires de l'ordre de quelques milliwatts, et dont la « brillance » (Watt par centimètre carré par stéradian) est assez importante. Pour le plasmon supporté par l'Or, l'énergie des photons est typiquement entre 2.2 et 2.5 eV, soit dans la partie jaune-vert du spectre. Les LEDs couvrent ces longueurs d'onde, mais avec des brillance souventy modestes. Les lasers à gaz ou solide doublés sont ici de bons candidats (532 nm, 514 nm).

Pour émettre de la lumière en direction de la zone de visualisation 11, la source 4 émet tout d'abord dans la direction Z et sur la zone 24 de la lumière en direction des réseaux 23', 23" et 23'" de couplage en extrémités de l'éventail de couplage. La lumière se couple alors dans le plan XY par les fils métalliques et vient se concentrer dans la zone de visualisation 11 (flèche 25'). la lumière permet alors d'illuminer les nanoparticules 10, puis une partie de celle-ci vient traverser les fils métalliques 5', 5" et 5'" (flèche 25") avant d'être découplée par les réseaux 8', 8" et 8'" pour aller jusqu'au moyen de détection 4.

Dans le cas où les fils de l'éventail sont enterrés, comme représentés sur les figures 16 et 17, les fils 5', 5", 5'" peuvent se prolonger sous le sillon 3 à une profondeur sous le sillon qui est inférieure à la longueur d'onde, et se raccorder par des canaux rapprochés quasiment parallèles 32 aux canaux 22',22", 22,"' du système d'illumination, qui sera lui aussi enterré dans ce cas. C'est la modification de la transmission le long des fins canaux plasmoniques 32 qui joignent les éventails sous la zone de visualisation 11 qui fournissent alors l'information recherchée, information qui sera d'autant plus forte que la particule 10 sera proche du fond dudit sillon 3.

Comme représenté sur la figure 16, le raccord 32 qui joint les éventails sous la zone de visualisation pourra être direct.

Selon un autre mode de réalisation, représenté sur la figure 17, le raccord 33 qui joint les éventails sous la zone de visualisation pourra être modulé par une section modifiée 34 de faible longueur, c'est-à-dire de longueur inférieure à la longueur d'onde, et de largeur inférieure, égale ou supérieure au reste du canal 32 pour inhiber la plus grande part de la transmission plasmonique directe par changement d'impédance et en forçant la transmission à se faire par les champs évanescents autour de la section modifiée, cette configuration rendant le système plus sensible à la présence de la particule 10 dans le sillon 11 au-dessus dudit raccord entre les éventails.

L'homme du métier notera ici qu'il convient de prêter attention au chromatisme du système. Celui-ci tend en effet à fonctionner autour d'une unique longueur d'onde, mais des réseaux courts, ainsi que d'autres variantes de modulation de forme des réseaux - par exemple une inscription simultanée de plusieurs réseaux dans la structure métallique - permettent notamment de disposer de plusieurs longueurs d'onde ou d'une fenêtre assez large pour bien trier profit des caractéristiques du plasmon utilisé. Or une adaptation fine des pas du réseau extracteur et de son amplitude permet de former dans le superstrat (ou dans le substrat) un faisceau dont le front d'onde est porteur d'aberrations bien définies, ces aberrations pouvant ainsi se compenser avec celles natives du système optique de champ lointain 4, le tout résultant en une absence apparente d'aberration. Le point focal apparent des ondes venant d'un réseau dans un des fils d'un éventail peut alors se trouver au-dessous ou au-dessous du substrat 2.

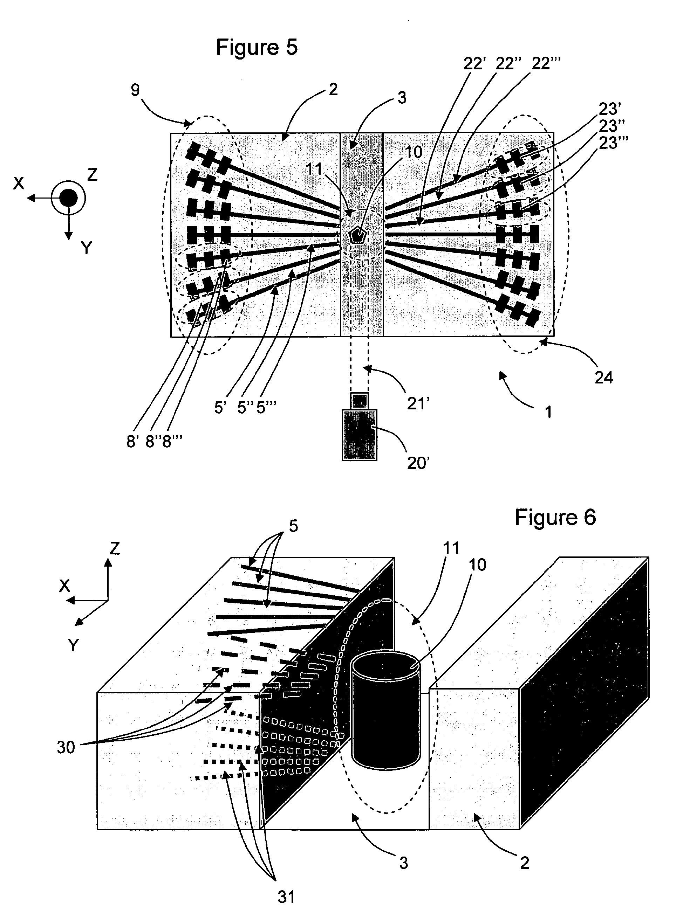

Suivant un troisième mode de réalisation de l'invention illustré par la figure 5, les deux éventails servent au découplage de l'information optique. Ainsi le moyen d'illumination est une source dans la troisième dimension Z de l'espace, directement en direction des nanoparticules 10, par exemple une diode électroluminescente, un laser ou toute autre source de lumière dirigée.

On décrit maintenant un quatrième mode de réalisation de l'invention à pluralité d'éventails superposés, en référence à la figure 6.

Dans cet exemple, le système comporte une pluralité d'éventails 5, 30 et 31 de fils métalliques disposés du même côté du sillon 3, parallèles et suivant le même plan XY, mais à des hauteurs différentes suivant l'axe Z. Chaque éventail 5, 30 ou 31 est analogue à celui décrit dans le premier mode de réalisation de l'invention. Ce système est réalisé par dépôt et structuration successive des éventails, du premier - le plus profond - jusqu'au dernier - le plus superficiel.

Des éventails voisins sont séparés par une couche d'espacement (non représentée) de nature diélectrique. Ces couches peuvent être constituées en oxydes, en nitrures ou en matériaux organiques couramment utilisés en nanotechnologie, comme par exemple du butylcyclobenzène.

Au niveau de la zone de visualisation 11, les points de départ des fils métalliques sont définis comme une famille de points autour d'un parallélépipède correspondant par exemple au canal microfluidique. Selon d'autres modes de réalisation, il peut être envisagé d'autres formes pour ces points de départ, à savoir une forme sphérique ou ellipsoïdale. Ces formes peuvent être adaptés aux canaux fluidiques visés. Ainsi, certaines des contraintes de la fluidique (établissement d'un flux laminaire ou turbulent, par exemple) et de la physico-chimie peuvent être prises en considération par le choix d'une forme appropriée.

Au niveau des réseaux découpleurs (non représentés, mais identiques à ceux selon le premier mode de réalisation décrit précédemment), il convient d'adopter certaines précautions afin d'éviter des effets d'ombre entre les moyens de diffraction issus des différents éventails superposés les uns sur les autres. Pour cela, il peut être prévu de prolonger les fils métalliques des éventails profonds au-delà de ceux moins profonds.

Selon une variante particulière non illustrée de ce quatrième mode de réalisation, du côté opposé par rapport au sillon 3 des éventails de découplage 5, 30 et 31, le moyen d'illumination est couplé à une pluralité d'éventails de couplage de l'information optique. Ces éventails de couplage sont identiques à celui décrit dans le deuxième mode de réalisation ci-dessus. Le moyen d'illumination peut être une source de lumière directive. On réalise ainsi un couplage plus fort des éventails avec le moyen d'illumination et une illumination mieux répartie sur l'ensemble de la zone de visualisation 11.

Selon des variantes utilisant une pluralité d'éventails superposés, ceux-ci sont agencés et présentent des caractéristiques leur permettant d'introduire un chromatisme prédéterminé. Les éventails situés à différentes hauteurs et ayant des réseaux découpleurs plus ou moins éloignés du centre peuvent avoir des caractéristiques de réseaux (période et amplitude de modulation) telles qu'elles dirigent les faisceaux autour d'un point de concours réel ou virtuel. La région autour de ce point de concours devient alors conjuguée à la région imagée au centre et donne un rendu agrandi. Des effets chromatiques peuvent ainsi être volontairement introduits dans le système, de façon analogue à une lentille en optique diffractive. Les angles moyens d'émergence des faisceaux aux différentes longueurs d'onde se déplacent en suivant une loi des réseaux avec un faisceau incident sur le réseau ayant l'indice effectif du fil de l'éventail considéré.

Selon d'autres variantes de l'invention, le système comporte également des moyens de correction d'aberration. Ces moyens peuvent consister en une compensation purement optique, soit en un traitement ultérieur d'une quantité importante d'informations, par exemple par la prise d'images à plusieurs profondeurs de focalisation de l'optique externe de reprise.

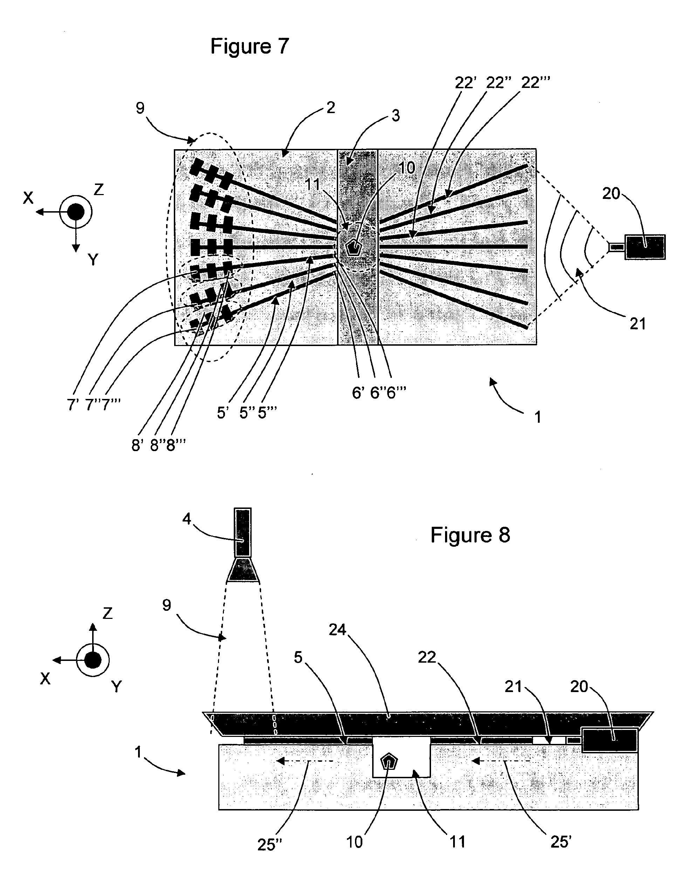

Suivant un cinquième mode de réalisation de l'invention illustré par les figures 7 et 8, le moyen d'illumination 21 est constituée d'un élément d'éclairage en optique intégrée, dans l'axe est situé dans le plan du substrat 2, par exemple à l'aide de sources rapportées, photo-pompées ou pompées électriquement. Ce moyen d'illumination est couplé à l'éventail 22 de sorte à diriger l'excitation électromagnétique aux fréquences lumineuses jusqu'à la zone de visualisation 11.

Selon une autre variante de ce cinquième mode de réalisation, l'illumination peut être directement dirigée vers la zone de visualisation 11 par un faisceau issu d'une source intégrée sur le substrat 2.

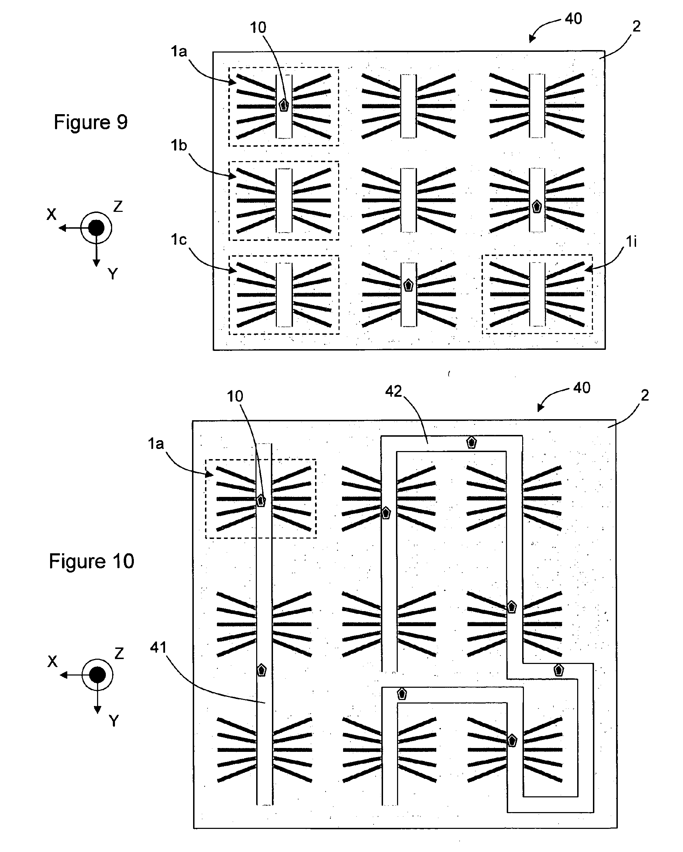

On décrit maintenant un sixième mode de réalisation de l'invention comprenant une pluralité de systèmes de détection élémentaires, en référence aux figures 9 et 10.

Le mode de réalisation de la figure 9 correspond à un équipement 40 de détection optique de particules 10, cet équipement comprenant une pluralité de systèmes élémentaires 1 a à 1i de détection optique de particules. Ces systèmes 1 a à 1i sont déposés sur un même substrat 2. Il est ainsi possible de profiter des techniques de fabrication collective. Il convient ici de noter que la répartition des systèmes élémentaires peut être unidimensionnelle ou bidimensionnelle.

Selon la variante proposée en référence à figure 10, des circuits nanofluidiques peuvent être inscrits en correspondance avec le réseau de systèmes élémentaires. Des zones de visualisation sont régulièrement réparties autour d'un canal droit 41 ou d'un canal de topologie plus complexe 42. En fonction des systèmes à joindre, ce canal peut être courbe, en spirale, avec des méandres, etc.

Ces canaux microfluidiques sont définis dans l'équipement à l'aide de marques prédéfinies, permettant l'alignement des repères des masques de gravure des canaux par rapport aux éventails (ou vice versa). On munit ensuite l'équipement de couvercles et d'orifices, permettant le contrôle du passage de fluides dans les zones de visualisation.

Selon une variante de celle de la figure 10, les zones de visualisation sont disposées autour de canaux verticaux ou obliques d'une « puce microfluidique », dans des canaux d'accès au circuit principal situé, pour sa part, dans le plan de la puce, et consistant en un ou plusieurs plans de micro-tuyaux superposés.

Pour des puces en matériau élastomère flexible, tel que le polydiméthylsiloxane (PDMS) et ses dérivés, il est possible de garder une compatibilité avec la flexibilité de la puce en modifiant les circuits plasmoniques pour qu'ils consistent en une succession d'îlots métalliques microniques très proches les uns des autres. Ainsi, les moyens de communication des informations optiques - les éventails - supportent les déformations des puces en PDMS. Cela diffère d'une structure en fils métalliques continus, qui se casseraient et présenteraient des caractéristiques optiques détériorées de façon imprévisible. Des nano-ruptures pratiquées a priori permettent d'éviter ce type d'inconvénient et de rendre l'équipement plus tolérant.

Selon un mode particulier de réalisation de l'invention, un fil métallique présente au niveau de son extrémité la plus proche de la zone de visualisation 11 une section - ou « gap ». Cette extrémité peut alors satisfaire des conditions d'adaptation d'impédance de l'information de la zone de visualisation vers le fil correspondant, de manière analogue à la pratique du guidage micro-onde à l'aide d'informations intermédiaires, typiquement ayant un quart de la longueur d'onde locale de l'information à communiquer.

Pour recouvrir les canaux fluidiques de l'équipement, ce dernier est recouvert d'un mince couvercle, qui peut être particulièrement aminci dans les zones de reprise optique, par exemple aminci à moins de 250 microns dans la partie où s'effectue la collecte de lumière.

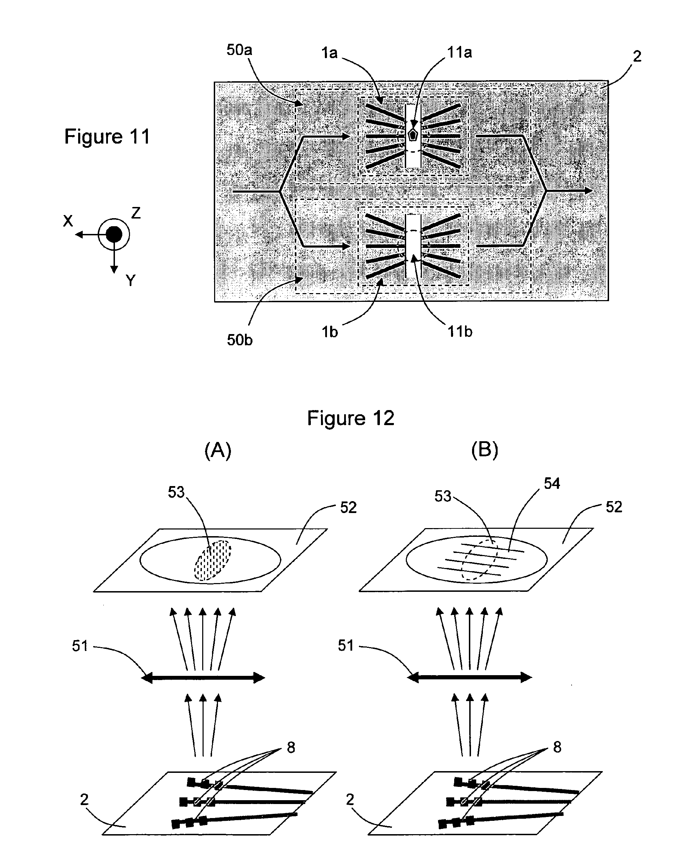

On décrit à présent un septième mode de réalisation, de type interférométrique, en référence aux figures 11 et 12.

Cet équipement utilise la sensibilité des systèmes interférentiels pour les faibles signaux. Il consiste pour cela à considérer l'ensemble de deux éventails convergeant de part et d'autre d'une zone de visualisation 11 a comme un système optique situé dans un bras 50a d'un interféromètre. Cet interféromètre peut être de type Michelson, Mach-Zehnder, Twyman-Green, ou autre. La séparatrice est de façon préférable disposée en amont des zones de couplage de l'illumination, puis une autre séparatrice (ou la même dans un michelson) est utilisée en aval du côté de la collecte. On peut ainsi utiliser le passage de la lumière dans deux bras et y comparer notamment l'information de phase. Un bras de référence 50b est adjoint au premier bras 50a, ce deuxième bras 50b étant basé sur une zone de visualisation 11 b adjacente et sensiblement identique à la première zone de visualisation 11a. Dans ces conditions, le signal d'interférence 53 entre les deux bras 50a et 50b, obtenu dans le plan 52 du moyen de détection via l'objectif 51 de celui-ci, peut révéler la présence d'une nanoparticule. Les dimensions transverses de la zone de visualisation qui sont ici utilisées afin de voir un signal ayant des déphasages dépendant de la position.

Il convient ici de noter qu'il est possible d'introduire un déphasage en sortie de système, hors des éventails, pour se retrouver dans une situation où le champ de vue est strié de franges rectilignes à l'équilibre entre les deux voies. Un écart à l'équilibre parfait apparaît alors comme une modification locale des franges 54, correspondant à des changements de position et de contraste révélant la phase et l'amplitude de la perturbation.

Du point de vue de la mise en commun d'un canal microfluidique et de la zone de visualisation, on peut mentionner plusieurs avantages que possède l'éventail électriquement conducteur, qui s'ajoutent à celui d'être un convoyeur d'information optique. Lorsqu'il n'y a pas de connections électriques entre les fils de l'éventail, ceux-ci peuvent servir de conducteurs électriques. Ils peuvent alors imposer des potentiels prédéfinis dans la zone de visualisation. Ces potentiels peuvent jouer des rôles attractifs ou répulsifs pour des particules chargées. Ils peuvent à l'inverse permettre d'écranter des charges d'espace pour permettre à des particules non neutres d'attendre les sites d'interaction visés. Ils peuvent aussi permettre la mise en place de nano-actuateurs de type MEMS ou NEMS dans la zone de visualisation, par exemple des parties mobiles qui influent sur la conductance hydraulique du canal, ou encore sur sa thermique locale. Une autre possibilité est de conduire in situ la fonctionnalisation par des réactions électrochimiques adéquates, comme cela est pratiqué notamment sur les couches d'or supportant des plasmons de surfaces usuels. Pour pratiquer une telle fonctionnalisation sur mesure, il peut être recouru à une lithographie définissant de petites ouvertures par lesquelles les traitements chimiques en phase vapeur ou liquide sont appliqués et les éléments de fonctionnalisation apportés chimiquement ou physico-chimiquement, par exemple par collage électrostatique.

Selon une variante particulière de ce septième mode de réalisation, il est prévu de disposer un circuit électronique d'interface de type CMOS, afin de contacter utilement les fils des éventails. Ce type de capteur est couramment utilisé en tant que circuit de lecture des matrices en arsénite de gallium GaAs ou autre. Ce circuit interface alors le réseau de fils des éventails vers l'extérieur, plus précisément vers un ordinateur de pilotage muni d'interfaces adéquates.

On peut finalement concevoir un système de lecture externe rassemblant dans les parties extérieures les fonctionnalités commodes connues sur les microscopes usuels. Il peut ainsi être muni d'accessoires usuels des microscopes, comme des polariseurs, des diaphragmes de champ et d'ouverture, des filtres colorés, des filtres coupe-bandes. Cela permet de favoriser l'augmentation du rapport signal à bruit relatif aux nanoparticules d'intérêt.

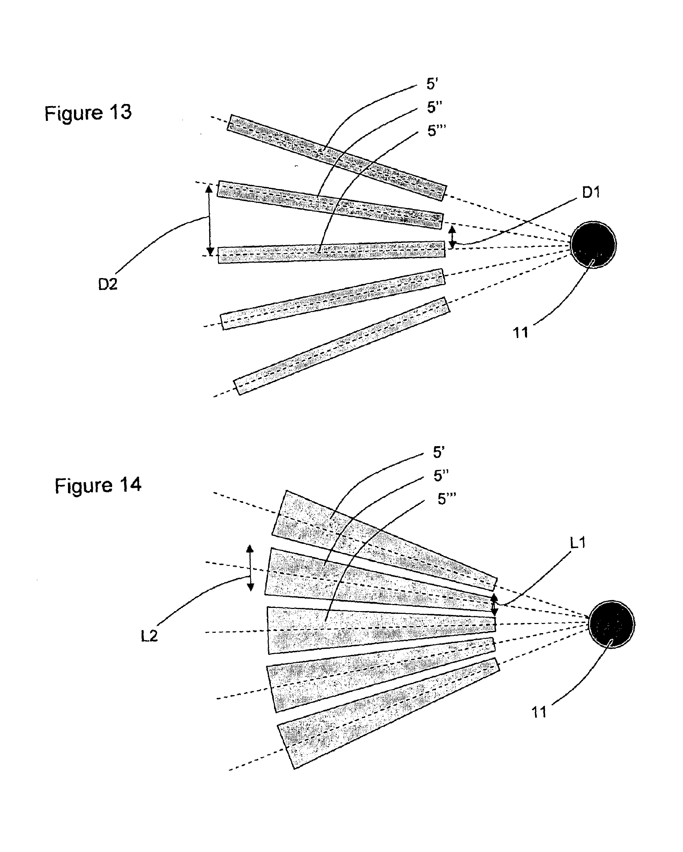

Enfin, en référence à présent aux figures 13 à 15, différentes variantes de réalisation de l'éventail de canaux plasmoniques métalliques sont possibles.

Selon une première variante (figure 13), les canaux plasmoniques métalliques 5', 5" et 5'" sont des fils métalliques de largeur constante et l'écartement entre deux fils voisins augmente entre les extrémités proches (écartement D1 inférieur à la demi-longueur d'onde) et les extrémités éloignées (écartement D2 supérieur à la demi-longueur d'onde) de la zone de visualisation.

Selon une deuxième variante (figure 14), les canaux plasmoniques métalliques 5', 5" et 5"' sont également des fils métalliques et l'écartement entre les fils est identiques aux deux extrémités, mais les fils présentent une largeur qui augmente entre les extrémités proches et les extrémités éloignées de la zone de visualisation.

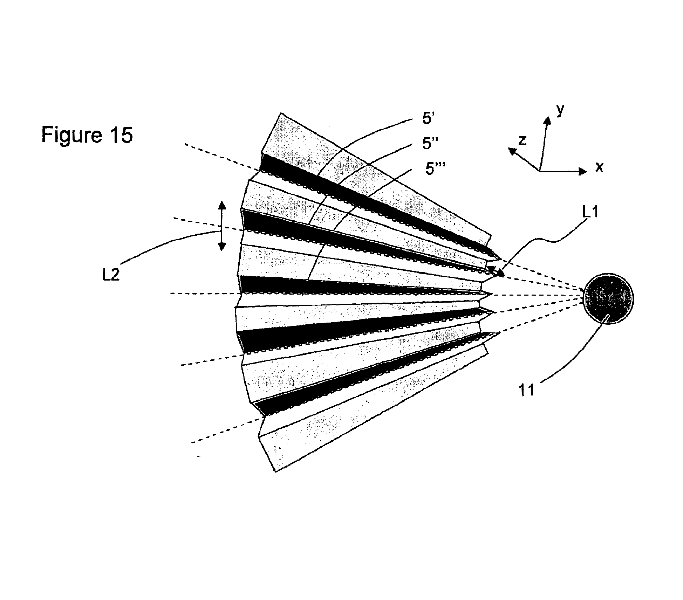

Selon une troisième variante (figure 15 présentant une vue en trois dimensions), la fonction de fils métalliques est assurée par des canaux plasmoniques supportés par des sillons en V dans un film métallique épais, et l'angle d'inclinaison de ce V est plus raide aux extrémités proches de la zone de visualisation 11 et moins raide aux extrémités éloignées. Par ailleurs, ces sillons 5', 5" et 5'" présentent une largeur qui augmente entre les extrémités proches et les extrémités éloignées de la zone de visualisation

Ces différentes variantes de réalisation des canaux plasmoniques métalliques peuvent également être combinées entre elles.

Les modes de réalisation précédemment décrits de la présente invention sont donnés à titre d'exemples et ne sont nullement limitatifs. Il est entendu que l'homme du métier est à même de réaliser différentes variantes de l'invention sans pour autant sortir du cadre du brevet.

En particulier, l'homme du métier notera que l'utilisation de canaux ou sillons fluidiques est l'utilisation préférée, mais ces canaux ne sont pas indispensables à l'obtention de signaux optiques de nanoparticules. En effet, la fabrication du système par lithographie du métal peut permettre de laisser de petits plots à des positions stratégiques dans les zones de visualisation, de façon à recueillir des signaux de présence d'une nanoparticule en l'absence de fluide ou en l'absence de canal ou de sillon. Ceci peut constituer un cas sensiblement calibré, avantageux dans la mise en oeuvre du dispositif pour la recherche des premiers signaux ou pour la calibration des signaux faibles.

## Revendications

1. Système (1) de détection optique de particules (10) disposées dans une zone de visualisation (11) susceptible d'être illuminée par un rayonnement présentant une longueur d'onde déterminée, ledit système (1) comportant un moyen (4) de détection optique, ainsi qu'un ensemble (5) de canaux plasmoniques métalliques (5',5",5"') disposés dans un même plan (XY) et dont une extrémité (6',6",6"') est suffisamment proche de la zone de visualisation (11) pour permettre un transfert de l'information optique d'une extrémité à l'autre desdits canaux (5',5",5"'), **caractérisé en ce que** lesdits canaux (5',5",5"') sont agencés de manière à ce que ledit ensemble (5) forme autour de la zone de visualisation (11) un éventail (5) de transfert de l'information optique, la valeur d'au moins une caractéristique spatiale dudit éventail (5) étant inférieure à ladite longueur d'onde au niveau des extrémités (6',6",6"') desdits canaux (5',5",5"') proches de ladite zone de visualisation (11), la valeur d'au moins une caractéristique spatiale de dudit éventail (5) étant supérieure à ladite longueur d'onde au niveau des extrémités (7',7",7'") desdits canaux (5',5",5"') éloignées de ladite zone de visualisation (11), ledit système comportant des moyens (8',8",8"') de découplage optique entre lesdites extrémités (7',7",7'") éloignées de ladite zone de visualisation (11) et ledit moyen (4) de détection optique disposé au-dessus du plan (XY) desdits canaux et desdits moyens de découplage optique.

2. Système (1) de détection optique selon la revendication 1, dans lequel la valeur d'au moins une caractéristique spatiale de l'éventail (5) de canaux (5',5",5"') est inférieure à la moitié de la longueur d'onde au niveau des extrémités (6',6",6"') proches de la zone de visualisation (11).

3. Système (1) de détection optique selon la revendication 1 ou 2, dans lequel une caractéristique spatiale de l'éventail (5) de canaux (5',5",5"') est la distance entre deux canaux (5',5",5"') voisins.

4. Système (1) de détection optique selon l'une des revendications 1 à 3, dans lequel une caractéristique spatiale de l'éventail (5) de canaux (5',5",5"') est la largeur des canaux (5',5",5"').

5. Système (1) de détection optique selon l'une des revendications 1 à 4, dans lequel les canaux plasmoniques métalliques (5',5",5"') sont constitués de sillons en V entaillant une couche métallique.

6. Système (1) de détection optique selon l'une des revendications précédentes, dans lequel les canaux (5',5",5"') de l'éventail (5) de transfert sont déposés sur un substrat (2).

7. Système (1) de détection optique selon l'une des revendications précédentes, dans lequel les moyens de découplage optique (8',8",8"') comprennent des extracteurs à réseaux situés au niveau de l'extrémité (7',7",7'") des canaux (5',5",5"') éloignée de la zone de visualisation (11).

8. Système (1) de détection optique selon l'une quelconque des revendications 1 à 15, comportant un moyen d'illumination (20) et un second ensemble (22) de canaux (22',22",22"') métalliques disposés dans un même plan (XY), dont une extrémité (6',6",6"') est sensiblement proche de la zone de visualisation (11), et agencés de manière à ce que ledit second ensemble (22) forme un second éventail (22) de transfert de l'information optique autour de la zone de visualisation (11), en symétrie du premier éventail (5) de transfert, par rapport à la zone de visualisation (11).

9. Système (1) de détection optique selon l'une des revendications 1 à 15, comportant un moyen d'illumination (20) et un second ensemble (22) de canaux (22',22",22"') métalliques agencés de manière à ce que ledit second ensemble (22) forme un second éventail (22) de transfert de l'information optique, en symétrie du premier éventail (5) de transfert, par rapport à la zone de visualisation (11), le premier et le second ensemble (5, 22) étant enterrés sous la zone de visualisation à une profondeur inférieure à la longueur d'onde, le premier et le second ensemble (5, 22) étant reliés l'un à l'autre par un réseau de canaux parallèles écartés les uns des autres d'une distance inférieure à la longueur d'onde du rayonnement.

10. Système (1) de détection optique selon l'une quelconque des revendications 8 à 9, dans lequel le moyen d'illumination (20) fonctionne en optique intégrée et est situé dans le plan (XY) du second éventail (22) de transfert.

11. Système (1) de détection optique selon l'une des revendications précédentes, comportant une pluralité d'éventails (5,30,31) parallèles à un même plan (XY) et situés à des hauteurs (Z) différentes par rapport à la zone de visualisation (11).

12. Système (1) de détection optique selon l'une des revendications précédentes, comportant des moyens de compensation d'aberration de l'image reconstituée par le moyen (4) de détection optique.

13. Système (1) de détection optique selon l'une des revendications précédentes, dans lequel au moins un éventail (5) de transfert de l'information optique est muni de contacts électriques pour le contrôle du potentiel électrostatique et de l'attraction ou la répulsion des particules (10) dans la zone de visualisation (11).

14. Système (1) de détection optique selon l'une des revendications précédentes, dans lequel au moins un éventail (5) de transfert de l'information optique est muni de contacts électriques pour le contrôle de réactions électrochimiques dans la zone de visualisation (11).

15. Procédé de fabrication d'un système (1) de détection optique de particules (10), comprenant une étape de lithographie sur une couche métallique déposée sur un substrat (2), pour la constitution de canaux plasmoniques métalliques (5',5",5"') sur un même plan (XY) dudit substrat (2) de manière qu'une extrémité (6',6",6"') soit proche d'une zone de visualisation (11) susceptible d'être illuminée par un rayonnement présentant une longueur d'onde déterminée, **caractérisé en ce que**, lors de ladite étape de lithographie, lesdits canaux plasmoniques métalliques (5',5",5"') sont agencés de manière à ce que ledit ensemble (5) forme autour de la zone de visualisation (11) un éventail (5) de transfert de l'information optique, la valeur d'au moins une caractéristique spatiale dudit éventail (5) étant inférieure à ladite longueur d'onde au niveau des extrémités (6',6",6"') desdits canaux (5',5",5"') proches de ladite zone de visualisation (11), la valeur d'au moins une caractéristique spatiale de dudit éventail (5) étant supérieure à ladite longueur d'onde au niveau des extrémités (7',7",7'") desdits canaux (5',5",5"') éloignées de ladite zone de visualisation (11), et **en ce qu'**il comprend également une étape de disposition de moyens de découplage optique (8',8",8"') entre lesdites extrémités (7',7",7'") éloignées de ladite zone de visualisation (11) et ledit moyen (4) de détection optique disposé au dessus du plan (XY) desdits canaux et desdits moyens de découplage optique.

## Patentansprüche

1. System (1) zum optischen Nachweis von Partikeln (10), die in einem Sichtbereich (11) angeordnet sind, der von einer Strahlung beleuchtet werden kann, die eine bestimmte Wellenlänge aufweist, wobei das System (1) ein Mittel (4) zum optischen Nachweis umfasst, ebenso wie eine Einheit (5) von metallischen plasmonischen Kanälen (5', 5", 5"'), die auf einer gleichen Ebene (XY) angeordnet sind, und wobei ein Ende (6', 6" ,6"') ausreichend nahe am Sichtbereich (11) ist, um eine Übertragung der optischen Information von einem Ende zum anderen der Kanäle (5', 5", 5"') zu ermöglichen, **dadurch gekennzeichnet, dass** die Kanäle (5', 5" ,5"') derart angeordnet sind, dass die Einheit (5) um den Sichtbereich (11) einen Fächer (5) zur Übertragung der optischen Information bildet, wobei der Wert von mindestens einer räumlichen Eigenschaft des Fächers (5) geringer als die Wellenlänge auf dem Niveau der Enden (6', 6", 6"') der Kanäle (5', 5", 5"') ist, die sich nahe am Sichtbereich (11) befinden, wobei der Wert von mindestens einer räumlichen Eigenschaft des Fächers (5) höher als die Wellenlänge auf dem Niveau der Enden (7', 7", 7"') der Kanäle (5', 5", 5"') ist, die vom Sichtbereich (11) entfernt sind, wobei das System Mittel (8', 8'', 8"') zur optischen Entkoppelung zwischen den entfernten Enden (7', 7", 7"') des Sichtbereichs (11) und dem Mittel (4) zum optischen Nachweis umfasst, das über der Ebene (XY) der Kanäle und den Mitteln zur optischen Entkopplung angeordnet ist.

2. System (1) zum optischen Nachweis nach Anspruch 1, wobei der Wert von mindestens einer räumlichen Eigenschaft des Fächers (5) von Kanälen (5', 5", 5"') geringer als die Hälfte der Wellenlänge auf dem Niveau der Enden (6', 6", 6"') ist, die sich nahe am Sichtbereich (11) befinden.

3. System (1) zum Nachweis nach Anspruch 1 oder 2, wobei eine räumliche Eigenschaft des Fächers (5) von Kanälen (5', 5", 5"') der Abstand zwischen zwei benachbarten Kanälen (5', 5", 5"') ist.

4. System (1) zum optischen Nachweis nach einem der Ansprüche 1 bis 3, wobei eine räumliche Eigenschaft des Fächers (5) von Kanälen (5', 5", 5"') die Breite der Kanäle (5', 5", 5"') ist.

5. System (1) zum optischen Nachweis nach einem der Ansprüche 1 bis 4, wobei die metallischen plasmonischen Kanäle (5', 5", 5"') aus Rillen in Form eines V bestehen, die eine metallische Schicht einkerben.

6. System (1) zum optischen Nachweis nach einem der vorhergehenden Ansprüche, wobei die Kanäle (5', 5", 5"') des Fächers (5) zur Übertragung auf einem Substrat (2) angeordnet sind.

7. System (1) zum optischen Nachweis nach einem der vorhergehenden Ansprüche, wobei die Mittel zur optischen Entkopplung (8', 8", 8"') Extraktornetze umfassen, die auf dem Niveau des Endes (7', 7", 7"') der Kanäle (5', 5", 5"') angeordnet sind, das vom Sichtbereich (11) entfernt ist.

8. System (1) zum optischen Nachweis nach einem der Ansprüche 1 bis 15, umfassend ein Mittel zur Beleuchtung (20) und eine zweite Einheit (22) von metallischen Kanälen (22', 22", 22'''), die auf einer gleichen Ebene (XY) angeordnet sind, wobei sich ein Ende (6', 6", 6"') ausreichend nahe am Sichtbereich (11) befindet und derart angeordnet ist, dass die zweite Einheit (22) einen zweiten Fächer (22) zur Übertragung der optischen Information um den Sichtbereich (11) bildet, symmetrisch zum ersten Fächer (5) zur Übertragung mit Bezug auf den Sichtbereich (11).

9. System (1) zum optischen Nachweis nach einem der Ansprüche 1 bis 15, umfassend ein Mittel zur Beleuchtung (20) und eine zweite Einheit (22) von metallischen Kanälen (22', 22", 22'''), die derart angeordnet sind, dass die zweite Einheit (22) einen zweiten Fächer (22) zur Übertragung der optischen Information bildet, symmetrisch zum ersten Fächer (5) zur Übertragung mit Bezug auf den Sichtbereich (11), wobei die erste und die zweite Einheit (5, 22) unter dem Sichtbereich in einer Tiefe verlegt sind, die geringer als die Wellenlänge ist, wobei die erste und die zweite Einheit (5, 22) miteinander durch ein Netz von parallelen Kanälen verbunden sind, die voneinander um eine Distanz beabstandet sind, die geringer als die Wellenlänge der Strahlung ist.

10. System (1) zum optischen Nachweis nach einem der Ansprüche 8 bis 9, wobei das Mittel zur Beleuchtung (20) mit integrierter Optik funktioniert und sich auf der Ebene (XY) des zweiten Fächers (22) zur Übertragung befindet.

11. System (1) zum optischen Nachweis nach einem der vorhergehenden Ansprüche, umfassend eine Vielzahl von parallelen Fächern (5, 30, 31), auf einer gleichen Ebene (XY) und angeordnet auf verschiedenen Höhen (Z) mit Bezug auf den Sichtbereich (11).

12. System (1) zum optischen Nachweis nach einem der vorhergehenden Ansprüche, umfassend Mittel zur Kompensation der Aberration des rekonstruierten Bildes durch das Mittel (4) zum optischen Nachweis.

13. System (1) zum optischen Nachweis nach einem der vorhergehenden Ansprüche, wobei mindestens ein Fächer (5) zur Übertragung der optischen Information mit elektrischen Kontakten zur Steuerung des elektrostatischen Potenzials und zur Anziehung oder zur Abstoßung der Partikel (10) im Sichtbereich (11) ausgestattet ist.

14. System (1) zum optischen Nachweis nach einem der vorhergehenden Ansprüche, wobei mindestens ein Fächer (5) zur Übertragung der optischen Information mit elektrischen Kontakten zur Steuerung von elektrochemischen Reaktionen im Sichtbereich (11) ausgestattet ist.

15. Verfahren zur Herstellung eines Systems (1) zum optischen Nachweis von Partikeln (10), umfassend einen Schritt des Lithographierens auf einer metallischen Schicht, die auf einem Substrat (2) abgelegt ist, zur Bildung von metallischen plasmonischen Kanälen (5', 5", 5"') auf einer gleichen Ebene (XY) des Substrats (2), so dass sich ein Ende (6', 6", 6"') nahe an einem Sichtbereich (11) befindet, der von einer Strahlung beleuchtet werden kann, die eine bestimmte Wellenlänge aufweist, **dadurch gekennzeichnet dass**, beim Schritt des Lithographierens, die metallischen plasmonischen Kanäle (5', 5", 5"') derart angeordnet sind, dass die Einheit (5) um den Sichtbereich (11) einen Fächer (5) zur Übertragung der optischen Information bildet, wobei der Wert von mindestens einer räumlichen Eigenschaft des Fächers (5) geringer als die Wellenlänge auf dem Niveau der Enden (6', 6", 6"') der Kanäle (5', 5", 5'") ist, die sich nahe am Sichtbereich (11) befinden, wobei der Wert von mindestens einer räumlichen Eigenschaft des Fächers (5) höher als die Wellenlänge auf dem Niveau der Enden (7', 7", 7"') der Kanäle (5', 5" , 5"') ist, die sich vom Sichtbereich (11) entfernt befinden, und dadurch, dass es auch einen Schritt des Anordnens von Mitteln zur optischen Entkopplung (8', 8", 8"') zwischen den entfernten Enden (7', 7", 7"') des Sichtbereichs (11) und dem Mittel (4) zum optischen Nachweis umfasst, angeordnet unter der Ebene (XY) der Kanäle und der Mittel zur optischen Entkopplung.

## Claims

1. System (1) for the optical detection of particles (10) disposed in a viewing zone (11) able to be illuminated by radiation having a given wavelength, said system (1) comprising an optical detection means (4), as well as a set of metal plasmonic channels (5', 5", 5"') disposed in the same plane (XY) and one end (6', 6", 6"') of which is sufficiently close to the viewing zone (11) to allow a transfer of optical information from one end of said channels (5', 5", 5"') to the other, **characterised in that** said channels (5', 5", 5'") are arranged so that said set (5) forms, around the viewing zone (11), an optical-information transfer fan (5), the value of at least one spatial characteristic of said fan (5) being less than said wavelength at the ends (6', 6", 6'") of said channels (5', 5", 5"') close to said viewing zone (11), the value of at least one spatial characteristic of said fan (5) being greater than said wavelength at the ends (7' 7" 7"') of said channels (5' 5", 5"') distant from said viewing zone (11), said system comprising means (8', 8", 8"') for optical decoupling between said ends (7', 7", 7"') distant from said viewing zone (11) and said optical detection means (4) disposed above the plane (XY) of said channels and said optical decoupling means

2. Optical detection system (1) according to claim 1, in which the value of at least one spatial characteristic of the fan (5) of channels (5', 5", 5"') is less than half the wavelength at the ends (6', 6", 6"') close to the viewing zone (11).

3. Optical detection system (1) according to claim 1 or 2, in which a spatial characteristic of the fan (5) of channels (5', 5", 5"') is the distance between two adjacent channels (5', 5", 5'").

4. Optical detection system (1) according to one of claims 1 to 3, in which a spatial characteristic of the fan (5) of channels (5', 5", 5"') is the width of the channels (5', 5", 5'").

5. Optical detection system (1) according to one of claims 1 to 4, in which the metal plasmonic channels (5', 5", 5"') consist of V-shaped furrows cut in a metal layer.

6. Optical detection system (1) according to one of the preceding claims, in which the channels (5', 5", 5"') of the transfer fan (5) are disposed on a substrate (2).

7. Optical detection system (1) according to one of the preceding claims, in which the optical decoupling means (8', 8", 8'") comprise array-type extractors situated at the end (7', 7", 7"') of the channels (5', 5", 5"') distant from the viewing zone (11).

8. Optical detection system (1) according to any one of claims 1 to 15, comprising an illumination means (20) and a second set (22) of metal channels (22', 22", 22"') disposed in the same plane (XY), one end (6', 6", 6"') of which is substantially close to the viewing zone (11), and arranged so that said second set (22) forms a second fan (22) for transferring optical information around the viewing zone (11), symmetrical with the first transfer fan (5), with respect to the viewing zone (11).

9. Optical detection system (1) according to one of claims 1 to 15, comprising an illumination means (20) and a second set (22) of metal channels (22', 22", 22'") arranged so that said second set (22) forms a second optical-information transfer fan (22), symmetrical with the first transfer fan (5), with respect to the viewing zone (11), the first and second sets (5, 22) being buried under the viewing zone at a depth less than the wavelength, the first and second sets (5, 22) being connected to each other by an array of parallel channels separated from one another by a distance less than the wavelength of the radiation.

10. Optical detection system (1) according to either of claims 8 to 9, in which the illumination means (20) functions as an integrated lens and is situated in the plane (XY) of the second transfer fan (22).

11. Optical detection system (1) according to one of the preceding claims, comprising a plurality of fans (5, 30, 31) parallel to the same plane (XY) and situated at different heights (Z) compared to the viewing zone (11).

12. Optical detection system (1) according to one of the preceding claims, comprising means for compensating any aberration in the image reconstituted by the optical detection means (4).

13. Optical detection system (1) according to one of the preceding claims, in which at least one optical-information transfer fan (5) is provided with electrical contacts for controlling the electrostatic potential and the attraction or repulsion of the particles (10) in the viewing zone (11).

14. Optical detection system (1) according to one of the preceding claims, in which at least one optical-information transfer fan (5) is provided with electrical contacts for controlling electrochemical reactions in the viewing zone (11).

15. Method for manufacturing a system (1) for the optical detection of particles (10), comprising a step of lithography on a metal layer deposited on a substrate (2), for forming metal plasmonic channels (5', 5", 5"') on the same plane (XY) of said substrate (2) so that one end (6', 6", 6'") is close to a viewing zone (11) able to be illuminated by radiation having a given wavelength, **characterised in that**, during said lithography step, said metal plasmonic channels (5', 5", 5"') are arranged so that said set (5) forms, around the viewing zone (11), an optical-information transfer fan (5), the value of at least one spatial characteristic of said fan (5) being less than said wavelength at the ends (6', 6", 6"') of said channels (5', 5", 5"') close to said viewing zone (11), the value of at least one spatial characteristic of said fan (5) being greater than said wavelength at the ends (7' 7" 7"') of said channels (5' 5", 5"') distant from said viewing zone (11), and **in that** it also comprises a step of disposing means (8', 8", 8"') for optical decoupling between said ends (7', 7", 7"') distant from said viewing zone (11) and said optical detection means (4) disposed above the plane (XY) of said channels and said optical decoupling means.
